# EUROPEAN PATENT APPLICATION

(11) **EP 1 849 433 A1**
(43) Date of publication of application: **31.10.2007**
(21) Application number: 07106211.1
(22) Date of filing: 16.04.2007
(51) Int. Cl.: A61C 8/00

(54) **Endosseous dental implant with two or more pins**

(30) Priority: 28.04.2006 IT PD20060169
(71) Applicant: Sweden & Martina S.p.a., 35020 Due Carrare (PD) (IT)
(72) Inventor: Csonka, Marco, 35020, Due Carrare (PD) (IT)
(74) Representative: Vinci, Marcello

(57) **Abstract**

The invention is a new multiple endosseous dental implant comprising two or more parallel pins substantially adjacent to one another and suitable for insertion in holes (F1, F2) suitably prepared in the bone (O), one or more of said pins being fitted at the top with a prosthetic connector (A) for the subsequent attachment of a prosthetic post (P), with at least one connecting bar (B) joining said pins together, situated in a position substantially at right angles to said pins and suitable for insertion in a corresponding groove (S) joining said holes (F1, F2) together, and wherein said connecting bar (B) is integrally attached to said pins in the vicinity of their top end.

## Description

The present patent relates to dental implants and in particular to enbloc endosseous dental implants with two or more pins and a related insertion method.

There are various known types of dental implant and various methods and surgical procedures for their insertion.

The main function of each known type of dental implant is to partially or totally substitute a patient's natural teeth, which have been lost or damaged due to trauma, degenerative biological processes or other causes.

Dental implants are consequently used in lieu of a patient's own teeth for both functional and aesthetic purposes.

In fact, the loss of one or more teeth not only affects a person's chewing capacity and represents an obvious discomfort for the patient, it also has other severe consequences.

For instance, if a tooth is missing completely, i.e. both the crown and the root of the tooth have been lost, the maxillary or mandibular jaw bone that contained said root tends to be progressively reabsorbed, i.e. it shrinks, with a consequent receding of the gums.

Receding gums and bone reabsorption are responsible for rather obvious aesthetic damage, altering the patient's profile, because the lips are no longer supported on the inside and consequently tend to withdraw, giving the face a senile appearance.

There are various known types of fixed dental prosthesis, i.e. that cannot be removed by the patient. For instance, there are known prostheses defined as crowns, which are dental elements anchored to the residual roots of natural teeth and made of a ceramic material, for instance, of a shape and size resembling the lost teeth.

Implants commonly known as bridges are also well known, which are anchored to suitably filed adjacent teeth.

Endosseous implants are also well known that, in addition to the visible part resembling the crown of the lost tooth, also comprise an endosseous element suitable for inserting permanently in the maxillary or mandibular jaw bone.

Said implants are preferred because they perfectly imitate the functionality and appearance of natural teeth, proving more efficient than other types of dental prosthesis, which may become detached if they are submitted to an excessive load and which are often extremely unsightly.

Said endosseous implants not only replace the visible outer part of the tooth, but also act as a root, arresting the phenomenon of bone reduction and reabsorption.

That is why it is very important to take timely action in the event of a tooth being completely lost, because if the bone reduction becomes excessive, it becomes impossible to use an endosseous bone implant because the amount of bone available becomes insufficient for the endosseous elements to ensure a stable grip in the jaw bone.

In fact, the known implants require a thickness of 8-9 mm of bone in order to be able to withstand the load of the prosthetic element over time.

If the reduction or reabsorption of the bone makes the insertion of the known type of endosseous implant unfeasible, it becomes necessary to include a bone graft procedure either before or at the time of the insertion of the dental implant in order to reintegrate the thickness and height of the patient's bone crest.

This solution is not always feasible, however. Bone grafts performed in the upper maxillary jaw bone have a good chance of thriving because this bone is highly spongy and well vascularized.

Conversely, bone grafts in the lower mandibular jaw bone, which is less spongy and less vascularized, are often rejected and are consequently expelled in almost 50% of cases.

That is why many patients are currently obliged to choose removable dental prostheses or dentures, particularly in the case of an atrophic rear lower jaw bone, and consequently cannot benefit from the advantages deriving from the use of endosseous dental implants.

To overcome the above-mentioned drawbacks, a new type of endosseous dental implant has been studied and carried out that comprises two or more pins to form a highly stable enbloc structure and the related insertion method.

The main object of the present invention is to enable implanting in the atrophic bone of patients who are not normally amenable to rehabilitation with dental implants.

Another object of the present invention is to ensure an optimal anchorage even in the case of a very limited height and thickness of bone being available.

Another object of the present invention is to facilitate the process of osseointegration and a consequent complete healing of the patient with a more limited risk of infection.

These and other direct and complementary objects are achieved by the new endosseous dental implant having two or more pins and forming a highly stable enbloc structure, and the related insertion method.

The new implant mainly comprises an enbloc structure made of commercially pure titanium and preferably consisting of three pins or cylinders substantially aligned and parallel to one another, with their top ends joined together by a bar placed substantially at right angles thereto.

The central pin and one of the outer pins, hereinafter called the mesial pin, each comprise a prosthetic connector situated on the upper surface, said prosthetic connector being, for instance, hexagonal in shape with a through screw for the subsequent attachment of a prosthetic post on which dental elements imitating the patient's natural teeth are subsequently cemented.

Each of said three pins is designed to fit inside a suitable cavity drilled for said purpose in the jaw bone.

Said pins are approximately half the length of the screws normally used in the known endosseous implants, so the available bone only needs to be 5.2 mm high to ensure a highly stable implant.

In particular, said central pin and said mesial pin are of larger gauge than the third, distal pin, which is preferably left without said prosthetic connector.

Said distal pin is made narrower than said other pins in order to require a smaller hole and to reduce the load on the bone, though it nonetheless represents a further point of anchorage for the new implants in the bone.

Said connecting bar has the dual purpose of increasing the stability of the implant and extending the area of contact between the bone and the implant, thereby maximizing the area of osseointegration.

Said connecting bar is positioned at the top of the implant and is not inserted deep inside the bone.

The insertion method used for the new implant entails the following steps:
- a study of the patient's bone structure to measure the height and thickness of the available bone;
- incision of the gum and detachment of a full-thickness flap;
- preparation of three holes in the bone, corresponding to the positions of said three pins;
- preparation of a groove in the dental arch that joins the three pins, in a shape corresponding to said connecting bar;
- insertion of the new implant pressing it in place with the fingers and then completing the procedure with the aid of a handle and a hammer;
- once osseointegration has taken place, connecting a post to each of said hexagon-shaped prosthetic connectors with a through screw, on which a permanent prosthesis prepared by the dental technician to resemble the patient's natural teeth is subsequently cemented.

In detail, said holes are drilled in the bone with the aid of a specifically-designed titanium template and using special drilling heads with a working length of 5.2 mm and a gauge slightly narrower than the gauges of the three pins comprising the new implant.

For the above-mentioned groove for containing the connecting bar, on the other hand, another titanium template and a special drilling device are used, with a diameter and height corresponding to the dimensions of said connecting bar.

The implant is given a rough surface finish, i.e. it is machined to achieve a surface roughness and tiny contours in order to maximize the contact area between bone and implant, i.e. the surface area of osseointegration.

In particular, the so-called Plasma Spray method is used to obtain said rough surface finish.

Basically, the new endosseous implant can be inserted even if the height of the available bone is only 5.2 mm because the implant exploits the length, not the height, of the toothless mandibular crest.

Moreover, by exploiting the tripod effect, the primary stability of the new endosseous implant is far greater than that of known short screw implants, and said connecting bar considerably extends the surface area of osseointegration without requiring any in depth drilling of the jaw bone, since said bar is inserted substantially on the surface of the bone.

The new implant is consequently more stable and effective than known implants, and it also entails less invasive surgical procedures and less trauma for the patient than known bone implants, with a speedier postoperative course and a more limited risk of failure.

The characteristics of the new endosseous implant with two or more pins are better clarified in the description that follows with reference to the drawings, attached hereto as non-limiting examples.

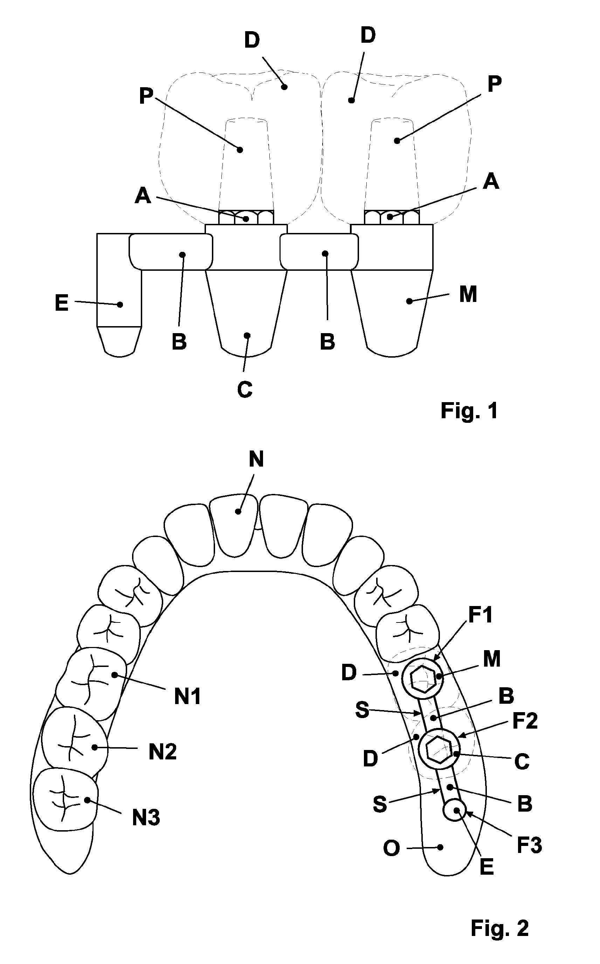

Figure 1 shows a side view of the new implant, while figure 2 shows a view from above of teeth in the mandibular bone, with the new implant positioned in the molar region.

The new implant is an enbloc structure preferably comprising three pins (E, C, M) substantially aligned and parallel to one another, and joined together at the top end by a connecting bar (B) substantially orthogonal to said pins.

The central pin (C) and the mesial pin (M) each include a prosthetic connector (A) situated on the upper surface, wherein said prosthetic connector (A) is, for instance, hexagonal in shape with a through screw for the subsequent attachment of a prosthetic post (P) on which dental elements (D) resembling the patient's natural teeth (N) are subsequently cemented.

Said central pin (C) and said mesial pin (M) have a larger gauge than the third distal pin (E), which also lacks said upper prosthetic connector.

The new implant is particularly indicated for insertion in the molar region of the mandibular bone (O), e.g. to replace the first and second molars (N1, N2) and the wisdom tooth (N3).

To insert the new implant, after determining the available thickness and height of the bone (O), the gum is incised and the upper flap, coinciding with the area where the implant is to be inserted, is detached.

Then holes (F1, F2, F3) and a groove (S) are drilled in the bone to contain the corresponding mesial (M), central (C), and distal (E) pins and said connecting bar (B).

Thus, with reference to the above description and to the attached drawings, the following claims are advanced.

## Claims

1. A new multiple endosseous dental implant, **characterized in that** it comprises:
• two or more substantially aligned and parallel pins (C, E, M, ...) suitable for insertion in holes (F1, F2, ...) drilled for said purpose in the bone (O), one or more of said pins being fitted at the top end with a prosthetic connector (A) for the subsequent attachment of one or more prosthetic posts (P);
• at least one connecting bar (B) connecting said pins, situated in a position substantially orthogonal to said pins and suitable for insertion inside a corresponding groove (S) joining said holes (F1, F2, ...) together;
wherein said connecting bar (B) is integrally fixed to said pins in the vicinity of their upper end.

2. A new dental implant according to claim 1, **characterized in that** it comprises three of said substantially parallel and adjacent pins (C, E, M), wherein the central pin (C) and the mesial pin (M) have a larger gauge than the distal pin (E).

3. A new dental implant according to claims 1, 2, **characterized in that** said central pin (C) and said mesial pin (M) are fitted at the top end with said prosthetic connector (A).

4. A new dental implant according to claims 1, 2, 3, **characterized in that** said connecting bar (B) is substantially straight.

5. A new dental implant according to the previous claims, **characterized in that** it is an enbloc structure.

6. A new dental implant according to the previous claims, **characterized in that** it is made entirely or partially of commercially pure titanium.

7. A new dental implant according to the previous claims, **characterized in that** the outer surface of said implant is made more or less rough.

8. A new dental implant according to the previous claims, **characterized in that** said upper prosthetic connectors (A) are hexagonal in shape on the outside and complete with a through screw.

9. A method for inserting said endosseous dental implant made according to one or more of the previous claims, comprising several stages including a study of the patient's bone structure in order to measure the available height and thickness of bone (O), incision of the gum and detachment of a full-thickness flap and drilling said holes (F1, F2, F3) in the bone (O), **characterized in that**:
• said holes (F1, F2, F3) in the bone (O) are drilled to coincide with the respective positions of the three pins (C, E, M) thanks to the use of a titanium template and special drilling heads;
• a titanium template and a special drilling head are used to prepare said groove (S) joining the holes in a shape corresponding to the shape of said connecting bar (B), then said implant is inserted by exerting pressure with the fingers, subsequently completing the insertion procedure with the aid of a handle and a hammer.

10. An insertion method according to claim 9, **characterized in that** said special drilling heads for preparing said holes (F1, F2, F3) have a working length of 5.2 mm and a gauge slightly narrower than the gauge of said pins (C, E, M).

11. An insertion method according to claim 9, **characterized in that** said special drilling heads for preparing said connecting groove (S) have a diameter and height corresponding to the dimensions of said connecting bar (B).
